# EUROPÄISCHE PATENTSCHRIFT

(11) **EP 1 566 312 B1**
(45) Veröffentlichungstag und Bekanntmachung des Hinweises auf die Patenterteilung: **12.11.2014**
(21) Anmeldenummer: 04107027.7
(22) Anmeldetag: 28.12.2004
(51) Int. Cl.: B60R 21/013, B60R 21/0132, B60R 21/0136

(54) **Vorrichtung zur Seitenaufprallerkennung**
Device for lateral collision recognition
Dispositif pour la détection d'un impact latéral

(30) Priorität: 18.02.2004 DE 102004007800
(43) Veröffentlichungstag der Anmeldung: 24.08.2005
(73) Patentinhaber: ROBERT BOSCH GMBH, 70442 Stuttgart (DE)
(72) Erfinder: Wellhoefer, Matthias, 71701, Schwieberdingen (DE)

(56) Entgegenhaltungen:
- EP-A- 1 114 757
- EP-A- 1 375 261
- EP-A- 1 386 803
- DE-A1- 4 324 753
- DE-A1- 10 049 905
- US-A1- 2004 024 505

## Beschreibung

### Stand der Technik

Die Erfindung geht aus von einer Verfahren zur Seitenaufprallerkennung nach der Gattung des unabhängigen Patentanspruchs.

Aus DE 196 32 836 C1 ist eine Anordnung zum Auslösen von Rückhaltemitteln in einem Fahrzeug bekannt. Dabei wird als Unfallsensor beispielsweise ein Beschleunigungssensor verwendet, um bei einem Seitenaufprall einen Seitenairbag auszulösen.

Aus DE 43 24 753 A1 ist eine Vorrichtung zur Seitenaufprallerkennung bekannt, wobei ein Deformationssignal als Triggersignal für die Integration eines Beschleunigungssignals einer Beschleunigungssensorik verwendet wird. Dieses Triggersignal wird bei einer kritischen Deformation des Seitenteils eines Fahrzeugs erzeugt. Wenn das integrierte Beschleunigungssignal eine Schwelle überschreitet, wird auf einen Auslösefall von Personenschutzmittel erkannt. Anstatt eine Integration kann auch eine Filterung des Beschleunigungssignals verwendet werden. Aus DE 100 49 905 A1 ist eine Steuergerät für ein Rückhaltesystem bekannt, wobei eine kinematische Sensorplattform verwendet wird, auf der zirkulare und lineare Beschleunigungen und auch Sensoren zur Erfassung des Lenkwinkels der Raddrehzahl der Gaspedalstellung, der Motordrehzahl und der Getriebegangerkennung vorliegen. Aus EP 1114 757 A2 ist eine Plausibilitätsprüfung von Luftdrucksensoren in Fahrzeugen bekannt. Dabei wird ein Luftdrucksensor in einer Kraftfahrzeugtür und im Motorsteuergerät angeordnet. Die Signale dieser Luftdrucksensoren werden miteinander verglichen, um ein plausibles Luftdrucksignal auszugeben.

### Vorteile der Erfindung

Das erfindungsgemäße Verfahren zur Seitenaufprallerkennung mit den Merkmalen des unabhängigen Patentanspruchs hat demgegenüber den Vorteil, dass die Entscheidung anhand des Signals der Unfallsensorik durch die Eigenquergeschwindigkeit plausibilisiert wird. Dazu wird die Eigenquergeschwindigkeit üblicherweise mit wenigstens einem Schwellwert verglichen. Die Eigenquergeschwindigkeit wird üblicherweise durch die Fahrdynamikregelung, also durch das ESP (Elektronisches Stabilitätsprogramm) bestimmt. Die Eigenquergeschwindigkeit ist die Geschwindigkeit, mit der sich ein Fahrzeug in Fahrzeugquerrichtung bewegt. Bei einem Seitenaufprall ist eine sehr schnelle Auslösung von Seitenairbags oder beispielsweise von Windowairbags erforderlich, da die Knautschzone hier sehr klein ist bzw. praktisch nicht vorhanden ist und sich beispielsweise ein Windowairbag erst nach 12 bis 35 ms voll entfaltet. Daher ist die schnelle Auslösung solcher Airbags bei einem Seitencrash notwendig. Eine schnelle Seitenaufprallsensierung, beispielsweise durch eine Drucksensorik, die in einem Seitenteil eines Fahrzeugs angeordnet ist, ist bereits bekannt. Allerdings muss die Auslöseentscheidung, die auf Grund eines Signals einer Drucksensorik getroffen wurde, durch eine weitere Entscheidung, die auf Grund eines Signals einer redundanten Sensorik getroffen wurde, bestätigt werden. Dies ist das Prinzip der Plausibilisierung. Diese Plausibilisierung, die aus dem Stand der Technik bekannt ist, ist aber erheblich langsamer, als die eigentliche Seitenaufprallsensierung, wie sie durch einen Drucksensor beispielsweise verwirklichbar ist. Daher wird die Eigenquergeschwindigkeit erfindungsgemäß genommen, um diese Plausibilisierung durchzuführen. Die Eigenquergeschwindigkeit kann noch vor dem eigentlichen Seitenaufprall bestimmt werden, so dass sie für einen optimalen Seitenaufprallschutz ideal für die Plausibilisierung ist. Typische Anforderungen an die Auslösezeiten bei einem Seitenairbag sind in Bereich von einigen wenigen Millisekunden zu sehen, weshalb zu diesem Zeitpunkt nur sehr wenige Datenwerte der Sensoren für die Feuerentscheidung vorliegen können. Daher ist eine Plausibilisierung, die bereits im Vorfeld eines eigentlichen Seitenaufpralls beginnen kann, von großem Nutzen. Damit wird die Zeitperformance, die durch die Drucksensoren erreicht wird, nicht verschlechtert. Vorteilhafter Weise kann eine Plausibilitätsentscheidung, die über die Eigenquergeschwindigkeit getroffen wurde, durch eine sogenannte Flagge in einem Arbeitsspeicher im Airbagsteuergerät gesetzt sein. Diese Flagge kennzeichnet dann die Plausibilisierung. Sollte nämlich die Eigenquergeschwindigkeit vor dem eigentlichen Aufprall wieder absinken, kann diese Flagge wieder zurückgenommen werden.

Durch die in den abhängigen Ansprüchen aufgeführten Maßnahmen und Weiterbildungen sind vorteilhafte Verbesserungen des im unabhängigen Patentanspruch angegebenen Verfahrens zur Seitenaufprallerkennung möglich.

Es ist vorgesehen, dass die Eigenquergeschwindigkeit für eine vorgegebene Zeit über einem Schwellwert liegen muss, um auf eine Plausibilisierung zu erkennen. Dies vermeidet, dass kurze Spitzen in einem Mess-Signal, das die Eigenquergeschwindigkeit kennzeichnet, ungewollt zu einer Plausibilisierung führen können. Damit werden kurzzeitige Ereignisse herausgefiltert.

Die Eigenquergeschwindigkeit kann auch zu einer Einteilung der Schwere des Seitenaufpralls verwendet werden. Dies kann je nach Höhe der Eigenquergeschwindigkeit erfolgen, die mittels Schwellwerten festgestellt wird. Damit ist es möglich, dass bereits vor dem Aufprall eine Kategorisierung des Seitenaufpralls erfolgt. Diese kann in verschiedenen Klassen unterschiedlicher Crashschwere durchgeführt werden. In diesem Sinne kann man mit hoher Wahrscheinlichkeit davon ausgehen, wenn zum Beispiel die Eigenquergeschwindigkeit signifikant über einer Schwelle für einen Auslösecrash liegt, dass eine Kollision mit einem festen Objekt wie einem Pfahl, einem Baum, einer Mauer oder einem anderen Auto, vorliegt. Überschreitet die Eigenquergeschwindigkeit die relative Auslösegeschwindigkeit um mindestens den Faktor 2, so wird bei einer Kollision eine Auslöseentscheidung sicher zu treffen sein. Daher kann diese Information im Auslösealgorithmus mitberücksichtigt werden, beispielsweise dadurch, dass eine bestimmte Mindesteigenquergeschwindigkeit eine frühzeitige Plausibilität liefern kann. Liegt eine sehr hohe Eigenquergeschwindigkeit vor, dann reicht es unter Umständen aus, um den Signalanfang, die ersten zwei bis vier Werte oder der Gradient oder der Signalanstieg am Anfang auf einen plausiblen Verlauf hin zu prüfen. Dies erfolgt mit einer Mindestschwelle, die niedriger ist, als die eigentliche Auslöseschwelle oder eine Mindeststeigung im Signal, ohne erst bis zur Überschreitung der ursprünglichen Auslöseschwelle zu warten. Damit kann schon eine Auslösung der seitlichen Airbags frühzeitig innerhalb der ersten wenigen Millisekunden eines Seitenaufpralls erfolgen.

Über die Eigenquergeschwindigkeit kann von vorneherein die aktuelle Mindestcrashgeschwindigkeit festgelegt werden und in Bezug zur Auslöseschwelle gesetzt werden, um die Schwere des möglichen Seitencrashes vorherzusagen. Über 30 km/h relativer Geschwindigkeit sind in der Regel alle Crashes Auslösecrashes, egal welcher Crashtyp vorliegt. So liegt es nahe, dass bei einer möglichen Kollision die Wahrscheinlichkeit sehr hoch ist, so dass der Airbag bei einer Eigenquergeschwindigkeit von über 30 km/h gezündet werden muss. Ist die Eigenquergeschwindigkeit sehr klein, so muss der Algorithmus genauer zwischen Fehlauslösung, Nichtauslösung und Auslösefällen trennen können, wohingegen bei höherer Eigenquergeschwindigkeit eine Fehlauslösung kaum wahrscheinlich ist, selbst, wenn das Objekt nicht feststeht, auf welches das Fahrzeug seitlich geschleudert wird.

Handelt es sich allerdings um eine feste Barriere, zum Beispiel um eine Wand, so erfolgt ein rascher Quergeschwindigkeitsabbau. Dieser Quergeschwindigkeitsabbau kann als Erweiterung auch im Algorithmus zur Crashdiskriminierung herangezogen werden, um zum Beispiel eine Crashschwerediskriminierung durchzuführen, was insbesondere für die Kategorisierung von Crashes mit mehrstufigen Seitenairbags wichtig ist, wobei bei leichteren Seitencrashes nur die erste Stufe gezündet wird und bei sehr schweren Seitencrashes mit hohem Verletzungsrisiko auch die zweite Stufe aktiviert wird.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der Vorrichtung und
- Figur 2: ein Flussdiagramm des erfindungsgemäßen Verfahrens.

### Beschreibung

Zur Seitenaufprallerkennung werden heute periphere Beschleunigungssensoren, aber auch Drucksensoren eingesetzt, um die Auslöseentscheidung für den Seitenairbag oder Windowairbag zu treffen. Drucksensoren in den Türen detektieren den quasiadiabatischen Druckaufbau im Türinnenvolumen bei einem Türcrash und ermöglichen eine sehr schnelle Crashdiskriminierung, falls die Tür getroffen ist.

Erfindungsgemäß wird vorgeschlagen, die Plausibilisierung beispielsweise einer Auslöseentscheidung basierend auf dem Signal eines Drucksensors durch die Eigenquergeschwindigkeit des Fahrzeugs vorzunehmen. Die Eigenquergeschwindigkeit des Fahrzeugs wird üblicherweise durch eine Fahrdynamikregelung wie das ESP ermittelt. Diese Ermittlung wird beispielsweise durch eine Berechnung aus der Fahrzeugeigengeschwindigkeit in Fahrzeuglängsrichtung und dem Schwimmwinkel durchgeführt. Diese Berechnung kann über einfache trigonometrische Beziehungen erfolgen.

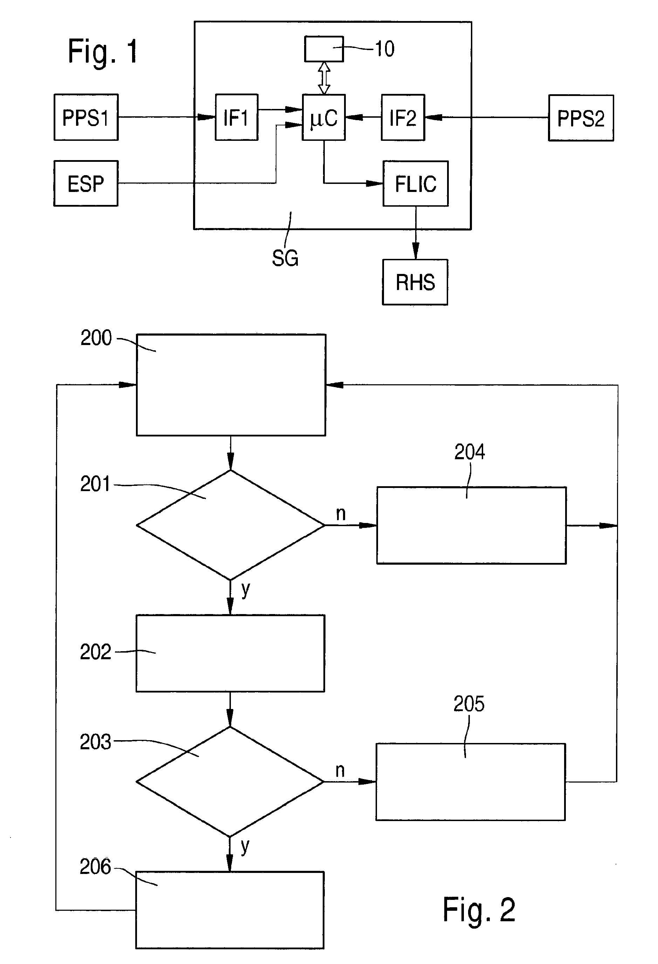

Figur 1 erläutert in einem Blockschaltbild die Vorrichtung. Ein Steuergerät SG zur Ansteuerung von Personenschutzmitteln (RHS) weist einen Prozessor µC, der hier als Mikrocontroller ausgebildet ist, auf. Der Mikrocontroller µC ist über einen Datenein-/Ausgang mit einem Speicher 10 verbunden, um Daten aus diesem Speicher 10 für die Berechnung der Auslösealgorithmen zu verwenden und auch, um den Speicher 10 als Arbeitsspeicher für Zwischenspeicherungen zu verwenden. Der Speicher 10 repräsentiert daher beispielsweise ein EEPROM und ein RAM. Über einen ersten Dateneingang ist der Mikrocontroller µC mit einem Interfacebaustein IF1 verbunden. An den Interfacebaustein IF1 im Steuergerät SG ist außerhalb des Steuergeräts SG ein Drucksensor PPS1 angeschlossen. Dieser Drucksensor liefert nach Zuführung von Energie, die er über den Interfacebaustein IF1 erhält, laufend aktuelle Druckwerte, beispielsweise aus der Seitentüre des Fahrers. Über einen zweiten Dateneingang ist an den Mikrocontroller µC ein zweiter Interfacebaustein IF2 angeschlossen. Auch an diesen Interfacebaustein IF2 ist ein zweiter Drucksensor PPS2, der beispielsweise in der Beifahrertür angeordnet ist, angeschlossen. Auch dieser Drucksensor liefert nach Aktivierung laufend aktuelle Druckwerte an den Interfacebaustein IF2, der diese dann an den Mikrocontroller µC, beispielsweise über den steuergeräteigenen Bus SPI liefert. Die Drucksensoren PPS1 und PPS2 weisen üblicherweise eine mikromechanische Struktur auf, um den Druck zu messen. Sie liefern bereits digitalisierte Werte an die Interfacebausteine IF1 und IF2. An einen dritten Dateneingang des Mikrocontrollers µC ist außerhalb des Steuergeräts ein Steuergerät zur Fahrdynamikregelung ESP angeschlossen. Dieser Anschluss kann beispielsweise über einen CAN-Baustein, also über einen CAN-Bus, erfolgen. Aber auch andere Datenverbindungen sind hier möglich. Über einen Datenausgang ist der Mikrocontroller µC mit einer Zündkreisansteuerung bzw. den Zündendstufen FLIC verbunden. Auch diese Verbindung kann beispielsweise über den SPI-Bus erfolgen. An einen Ausgang der Zündendstufen FLIC sind die Zündelemente RHS angeschlossen, die gezündet werden, um die einzelnen Personenschutzmittel zu aktivieren. Das Steuergerät SG weist in Wirklichkeit weitere Bauelemente auf, wie beispielsweise eine eigene Sensorik, weitere Interfacebausteine und andere Elektronik, wie auch die Energiereserve, die jedoch der Einfachheit halber hier weggelassen wurden.

Zur Seitenaufprallsensierung wertet der Mikrocontroller µC die Druckdaten der Drucksensoren PPS1 und PPS2 aus. Zeigen diese sechs Signale einen Seitenaufprall an, dann kann der Mikrocontroller µC über die Zündendstufen FLIC die Zündelemente auslösen. Als Plausibilisierung wird hier jedoch die Eigenquergeschwindigkeit des Fahrzeugs verwendet. Diesen Wert erhält der Mikrocontroller µC vom Steuergerät für Fahrdynamikregelung ESP. Es ist möglich, dass die Bestimmung der Eigenquergeschwindigkeit auch aus noch anderen Daten, die das Steuergerät ESP an den Mikrocontroller µC liefert, gewonnen werden kann. Die Eigenquergeschwindigkeit wird nun mit mindestens einem Schwellwert, der als Auslöseschwelle ebenfalls bezeichnet wird, verglichen, um die Plausibilitätsentscheidung zu treffen. Diese Auslöseschwelle kann auch, wie die für die Drucksensoren, zeitdynamisch sein. Das heißt in Abhängigkeit von Ereignissen bzw. der Zeit werden die Auslöseschwellen verändert. Im Weiteren ist es möglich, dass aus der Eigenquergeschwindigkeit der Mikrocontroller µC durch Schwellwertvergleich die Unfallschwere bei einem Seitenaufprall abschätzt. Diese Bestimmung kann dann auf die Auslöseschwellen der Drucksensoren Einfluss nehmen. Bei einem schweren Unfall können die Auslöseschwellen abgesenkt werden, während bei einem zu erwartenden leichten Unfall die Auslöseschwellen für das Drucksensorsignal erhöht werden können. In Abhängigkeit von der Eigenquergeschwindigkeit kann auch die Rauschschwelle, mit der die Drucksensorsignale verglichen werden, verändert werden. Damit ist es beispielsweise möglich, den Algorithmus zur Verarbeitung der Drucksensorsignale empfmdlicher zu gestalten oder unempfindlicher zu machen. Damit kann sehr situationsgerecht auf die Verarbeitung der Drucksensorsignale reagiert werden.

Figur 2 erläutert in einem Flussdiagramm die Funktionsweise des erfindungsgemäßen Verfahren. In Verfahrensschritt 200 wird die Eigenquergeschwindigkeit entweder durch das Steuergerät ESP oder durch den Mikrocontroller µC anhand von Daten den Steuergeräts ESP bestimmt. In Verfahrensschritt 201 wird die Eigenquergeschwindigkeit mit einer ersten Schwelle verglichen. Die Schwelle 1 dient dazu, den Algorithmus für die Verarbeitung der Drucksensorsignale empfmdlicher zu gestalten oder in den Standardeinstellungen zu belassen. Ist nämlich die Eigenquergeschwindigkeit unterhalb dieser ersten Schwelle, dann wird zu Verfahrensschritt 204 gesprungen und die Auslöseschwellen im Algorithmus für die Verarbeitung der Drucksensorsignale bleiben auf ihren Ausgangswerten. Wurde jedoch diese erste Schwelle durch die Eigenquergeschwindigkeit überschritten, wird zu Verfahrensschritt 202 übergegangen. Hier erfolgt nun ein Absenken dieser Algorithmusschwellen und damit wird die Auslösung der Personenschutzmittel bei niedrigeren Schwellen erreicht. Danach wird zu Verfahrensschritt 203 gesprungen, wo erneut die Eigenquergeschwindigkeit, diesmal mit einer zweiten Schwelle, verglichen wird. Diese Schwelle hat die Aufgabe festzustellen, ob ein Auslösefall vorliegt, oder nicht. Liegt die Eigenquergeschwindigkeit unter der zweiten Schwelle, dann wird in Verfahrensschritt 205 festgestellt, dass keine Plausibilität vorliegt und eine Auslösung der Rückhaltemittel wird hiermit verhindert. Liegt jedoch die Eigenquergeschwindigkeit über dieser zweiten Schwelle, dann wird in Verfahrensschritt 206 festgestellt, dass ein Auslösefall vorliegt und die Plausibilität wird festgestellt. Somit kann, wenn auch der Drucksensoralgorithmus eine Auslösung der Personenschutzmittel für erforderlich hält, die Auslösung dieser Personenschutzmittel durch die Ansteuerung der Zündendstufen FLIC durch den Mikroprozessor µC und damit die Zündung der Zündelemente RHS erfolgen.

## Patentansprüche

1. Verfahren zur Seitenaufprallerkennung mit folgenden Verfahrensschritten:
- Bestimmung einer Eigenquergeschwindigkeit eines Fahrzeugs durch ein erstes Steuergerät zur Fahrdynamikregelung (ESP) oder durch einen Mikrocontroller (µc) eines zweiten Steuergeräts (SG) zur Ansteuerung von Personenschutzmittel (RMS) anhand von Daten des ersten Steuergeräts (ESP)
- Vergleichen der Eigenquergeschwindigkeit mit einer ersten Schwelle, wobei die ersten Schwelle dazu dient, einen Algorithmus für eine Verarbeitung von Drucksensorsignalen empfindlicher zu gestalten oder in Standardeinstellungen zu belassen.
- Vergleichen der Eigenquergeschwindigkeit mit einer zweiten Schwelle, um festzustellen, ob ein Ansteuerungsfall für die Personenschutzmittel vorliegt, oder nicht, wobei beim Unterschreiten der zweiten Schwelle durch die Eigengeschwindigkeit festgestellt wird, dass keine Plausibilität vorliegt und die Ansteuerung wird damit verhindert, liegt die Eigenquergeschwindigkeit über der zweiten Schwelle, dann wird ein Ansteuerungsfall und die Plausibilität festgestellt.
- Ansteuern der Personenschutzmittel, wenn die Plausibilität vorliegt und wenn der Algorithmus die Ansteuerung für erforderlich hält, wobei in diesem Fall der Algorithmus anhand der Drucksensorsignale von zwei Luftdrucksensoren den Seitenaufprall erkennt.

## Claims

1. Method for detecting side impacts having the following method steps:
- determining an inherent lateral speed of a vehicle by means of a first controller for vehicle movement and dynamics control (ESP) or by means of a microcontroller (µc) of a second controller (SG) for activating personal protection means (RMS) on the basis of data of the first controller (ESP),
- comparing the inherent lateral speed with a first threshold, wherein the first threshold serves to make an algorithm for processing pressure sensor signals more sensitive or to leave it in standard settings,
- comparing the inherent lateral speed with a second threshold in order to determine whether an activation situation is present for the personal protection means or not, wherein when the second threshold is undershot by the inherent speed it is determined that there is no plausibility applicable and the activation is therefore prevented, and if the inherent lateral speed is above the second threshold an activation situation is determined and it is determined that plausibility is applicable,
- activation of personal protection means if plausibility is applicable and if the algorithm considers the activation to be necessary, wherein in this case the algorithm detects the side impact on the basis of the pressure sensor signals of two air pressure sensors.

## Revendications

1. Procédé pour la détection d'un impact latéral avec les étapes de procédé suivantes :
- détermination de la vitesse transversale propre d'un véhicule par le biais d'un premier appareil de commande servant au contrôle dynamique de stabilité (ESP) ou par de biais du microcontrôleur (SG) d'un deuxième appareil de commande (SG) servant à exciter les moyens de protection des personnes (RMS) à l'aide de données provenant du premier appareil de commande (ESP) ;
- comparaison de la vitesse transversale propre avec un premier seuil, le premier seuil servant à modeler de façon plus sensible un algorithme pour le traitement de signaux de capteur de pression ou à maintenir les réglages standard ;
- comparaison de la vitesse transversale propre avec un deuxième seuil, pour constater la présence ou l'absence d'un cas d'excitation des moyens de protection des personnes, la vitesse propre permettant de déterminer en cas de passage en dessous du deuxième seuil l'absence de caractère plausible, empêchant ainsi l'excitation, tandis que si la vitesse transversale propre passe au-dessus d'un deuxième seuil, un cas d'excitation et le caractère plausible sont constatés ;
- excitation des moyens de protection des personnes lorsque le caractère plausible est constaté et lorsque l'algorithme tient pour nécessaire l'excitation, l'algorithme identifiant dans ce cas le choc latéral à l'aide des signaux de capteur de pression de deux capteurs de pression d'air.
